(19) Europäisches Patentamt
European Patent Office
Office européen des brevets

(11) Numéro de publication : **0 284 476 B1**

(12) **FASCICULE DE BREVET EUROPEEN**

(45) Date de publication du fascicule du brevet :
07.08.91 Bulletin 91/32

(51) Int. Cl.⁵ : **B24C 3/32**, B24C 1/10,
G01N 29/00, C21D 7/06

(21) Numéro de dépôt : 88400518.2

(22) Date de dépôt : 04.03.88

(54) **Dispositif et procédé de martelage par des particules de la surface intérieure d'un tube de générateur de vapeur, avec contrôle de l'efficacité du martelage.**

(30) Priorité : 13.03.87 FR 8703484

(43) Date de publication de la demande :
28.09.88 Bulletin 88/39

(45) Mention de la délivrance du brevet :
07.08.91 Bulletin 91/32

(84) Etats contractants désignés :
BE DE ES SE

(56) Documents cités :
EP-A- 0 181 810
NL-A- 7 411 393
US-A- 3 906 780
PATENT ABSTRACTS OF JAPAN, vol. 9, no. 86
(P-349)[1809], 16 avril 1985, page 111 P 349; &
JP-A-59 216 050 (TOYOTA JIDOSHA K.K.) 06-
12-1984

(56) Documents cités :
PATENT ABSTRACTS OF JAPAN, vol. 8, no. 33
(P-254)[1470], 14 février 1984, page 41 P 254; &
JP-A-58 187 853 (SHIN NIPPON SEITETSU
K.K.) 02-11-1983
PATENT ABSTRACTS OF JAPAN, vol. 3, no. 68
(C-48), 13 juin 1979, page 147 C 48; & JP-A-54
43 836 (MITSUBISHI JUKOGYO K.K.) 04-
06-1979

(73) Titulaire : FRAMATOME
Tour Fiat 1, Place de la Coupole
F-92400 Courbevoie (FR)

(72) Inventeur : Isnardon, Gérard
10 rue Sadi Carnot
F-92000 Nanterre (FR)
Inventeur : Jacquier, Paul
37 Chemin des Bruyères
F-69160 Tassin la Demi-Lune (FR)
Inventeur : Voisembert, Sylvie
Les Jardins de la Salette
F-38540 Heyrieux (FR)

(74) Mandataire : Bouget, Lucien et al
Cabinet Lavoix 2, Place d'Estienne d'Orves
F-75441 Paris Cédex 09 (FR)

## Description

L'invention concerne un dispositif de martelage par des particules, de la surface intérieure d'un tube de générateur de vapeur serti dans une plaque tubulaire avec contrôle de l'efficacité du martelage et le procédé de martelage correspondant.

Il est connu d'effectuer un martelage de la surface intérieure d'un tube de générateur de vapeur par des particules en suspension dans un gaz circulant à grande vitesse, pour réaliser une mise en compression de la paroi intérieure du tube, en particulier dans des zones de ce tube susceptibles d'être affectées par la corrosion sous tension.

Un tel procédé et un dispositif pour sa mise en oeuvre ont été décrits dans les brevets Français 2.572.965 ET 2.584.320 déposés par la Société FRAMATOME.

Ce procédé de mise en compression peut être appliqué en particulier aux tubes de générateur de vapeur des réacteurs nucléaires à eau sous pression dont le diamètre intérieur est voisin de 0,020 m. La taille des particules utilisées pour le martelage, le débit massique de ces particules ainsi que la vitesse du gaz porteur doivent être réglés à des valeurs précises, pour assurer une bonne efficacité de l'opération de mise en compression des zones sensibles de la surface intérieure du tube.

Cette opération est effectuée à l'intérieur de la boîte à eau du générateur de vapeur, de manière télécommandée, en utilisant un dispositif comportant une enveloppe externe de forme tubulaire comportant, à l'une de ses extrémités, une face d'appui qui est destinée à venir en contact avec la face d'entrée de la plaque tubulaire, successivement autour de l'extrémité de chacun des tubes à traiter qui affleurent sur cette face d'entrée. Un outil de martelage comportant une buse de projection des particules en suspension dans le gaz porteur, fixée à l'extrémité d'une gaine souple, est monté mobile dans la direction axiale, par rapport à l'enveloppe externe. Pour effectuer le martelage d'un tube, l'enveloppe externe est mise en contact, par sa face d'extrémité, avec la face d'entrée de la plaque tubulaire, autour du tube à traiter. L'outil de martelage est introduit dans le tube et déplacé à l'intérieur de ce tube, jusqu'à la zone à traiter.

Le traitement est ensuite effectué par projection des particules grâce au gaz porteur, la buse de projection étant déplacée à vitesse lente dans la zone à traiter.

L'opération de martelage doit être effectuée successivement sur un très grand nombre de tubes, les générateurs de vapeur des réacteurs nucléaires à eau sous pression comportant plusieurs milliers de tubes. En outre, ces tubes ne sont pas accessibles pendant le traitement de mise en compression ou après ce traitement, à cause de leur radio-activité. Il n'est donc pas possible de vérifier, par des moyens simples et par une méthode directe, l'efficacité du traitement de mise en compression.

On connaît une méthode de mesure de l'efficacité d'un traitement de martelage par des particules tel qu'un microbillage ou un grenaillage, qui consiste à utiliser une éprouvette de type normalisé désignée par l'appellation ALMEN, sur laquelle on effectue l'opération de martelage par les particules. La norme Française NF L 06832 de décembre 1979 définit de façon précise la méthode d'essai et les paramètres définissant l'efficacité du martelage. En particulier, on détermine le recouvrement de ce martelage qui est défini par le rapport de la surface des empreintes à la surface à marteler ou à grenailler.

On connaît également une méthode de mesure de l'efficacité du microbillage de la surface intérieure d'un tube, c'est-à-dire le martelage de cette surface par des billes de petites dimensions, qui consiste à effectuer le traitement sur un tube de même diamètre et de même épaisseur que les tubes à traiter. Après avoir effectué le traitement sur le tube d'essai, on réalise une fente dans la surface de ce tube, suivant une génératrice puis on mesure le diamètre du tube après découpage de la fente. On calcule la variation relative du diamètre du tube, après découpage de la fente. Cette valeur est représentative de l'efficacité du martelage effectué sur sa surface intérieure. Cette méthode présente l'inconvénient d'être longue et de nécessiter de nombreuses manipulations pour obtenir une mesure de l'efficacité du martelage.

Les méthodes de contrôle selon l'art antérieur décrites ci-dessus ne peuvent être mises en oeuvre, dans le cas du traitement d'un générateur de vapeur d'un réacteur nucléaire à eau sous pression, que périodiquement, après le traitement d'un certain nombre de tubes et à l'extérieur de la boîte à eau du générateur de vapeur.

Lorsqu'on effectue le contrôle sur des éprouvettes ALMEN, lors du traitement de mise en compression par martelage des tubes d'un générateur de vapeur, on effectue généralement un contrôle sur éprouvette périodiquement, après avoir réalisé le martelage d'un lot de plusieurs centaines de tubes, par exemple trois cents tubes. Il est nécessaire pour cela de ressortir l'outillage de la boîte à eau du générateur de vapeur et donc d'arrêter l'opération de traitement des tubes.

Dans les conditions d'ambiance régnant au voisinage du générateur de vapeur, et en particulier, à cause de l'existence d'une certaine radio-activité des éléments mis en oeuvre, il est nécessaire de prendre certaines précautions pour la protection des personnes qui travaillent sur le site.

Dans ces conditions, le temps consacré à l'ensemble des opérations de contrôle représente approximativement 10% du temps total consacré à l'opération de mise en compression par martelage.

En outre, si le contrôle décèle une déficience du traitement, il est nécessaire de retraiter l'ensemble du lot de tubes dont le martelage a été effectué depuis le dernier contrôle. En effet, il n'est pas possible de déterminer à partir de quel tube le traitement par martelage s'est avéré défectueux.

On ne connaît pas jusqu'ici de dispositif permettant de contrôler l'efficacité d'une opération de martelage de la surface intérieure d'un tube de générateur de vapeur et d'obtenir une information immédiatement après le martelage du tube et sans avoir à interrompre l'opération de martelage en cours.

Le but de l'invention est donc de proposer un dispositif de martelage par des particules, de la surface intérieure d'un tube de générateur de vapeur serti dans une plaque tubulaire, comportant une enveloppe externe de forme tubulaire ayant une face d'extrémité venant en appui sur une face de la plaque tubulaire autour d'une extrémité affleurante du tube et un outil, comportant une buse de projection des particules transportées par un gaz à grande vitesse fixée à l'extrémité d'une gaine souple, monté mobile axialement dans l'enveloppe externe, ce dispositif permettant un contrôle immédiat et en ligne de l'efficacité du martelage ne nécessitant pas de démonter l'outillage et d'interrompre l'opération de martelage.

Dans ce but, le dispositif suivant l'invention comporte, pour permettre un contrôle de l'efficacité du martelage, au moins un capteur piézo-électrique disposé en contact avec une partie rectiligne de la paroi de l'enveloppe externe, au voisinage de son extrémité d'appui sur la plaque tubulaire et des moyens de mesure du signal électrique engendré dans le capteur.

L'invention est également relative à un procédé de martelage mettant en oeuvre le dispositif suivant l'invention et permettant d'éviter un arrêt de l'opération de martelage et des pertes de temps, pour effectuer un contrôle de l'efficacité du martelage.

Afin de bien faire comprendre l'invention, on va maintenant décrire, en se référant aux figures jointes en annexe, un mode de réalisation d'un dispositif suivant l'invention et sa mise en oeuvre pour la réalisation d'une opération de martelage interne de tubes d'un générateur de vapeur d'un réacteur nucléaire à au sous pression avec un contrôle d'efficacité du martelage.

La figure 1 est une vue en coupe par un plan vertical de symétrie d'un dispositif de martelage suivant l'invention équipé de capteurs piézoélectriques.

La figure 2 est une vue suivant 2-2 de la figure 1.

La figure 3 est une vue schématique générale de l'ensemble des moyens de contrôle du dispositif suivant l'invention.

La figure 4 est une représentation des signaux électriques fournis par les capteurs de contrôle.

La figure 5 est une courbe d'étalonnage donnant la correspondance entre les mesures effectuées avec le dispositif suivant l'invention et des mesures correspondantes sur éprouvettes ALMEN.

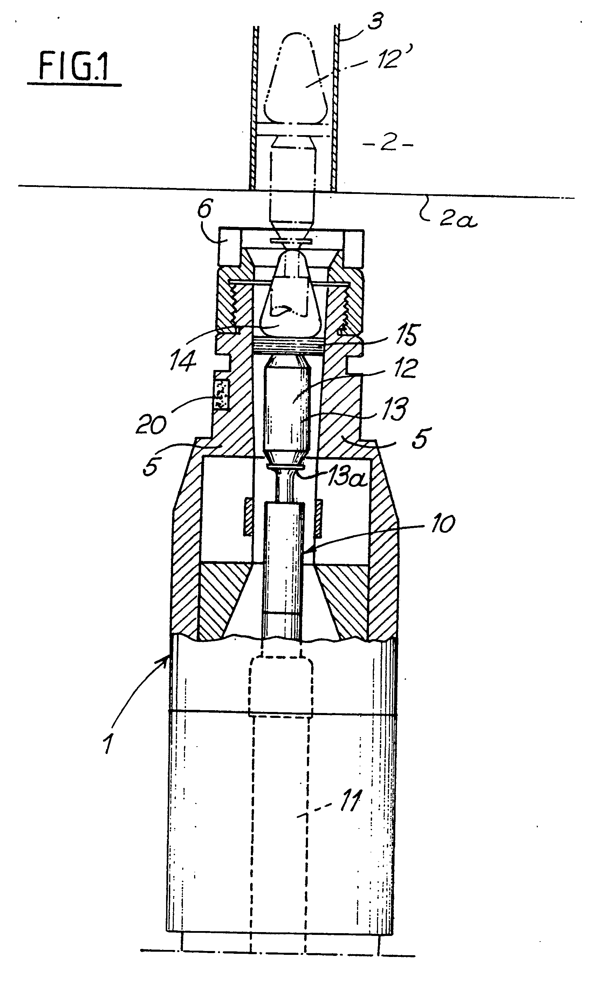

Sur la figure 1, on voit l'extremité d'un outillage de martelage 1 en position à l'intérieur de la boîte à eau d'un générateur de vapeur, à l'aplomb d'un tube 3 de ce générateur de vapeur serti dans la plaque tubulaire 2.

L'outillage 1 comporte une enveloppe externe 5 de forme tubulaire comportant une extrémité 6 constituée par une bague d'appui dont le diamètre intérieur est supérieur au diamètre du tube 3.

Pour effectuer le martelage dans le tube 3, l'outillage 1 est mis en position sous la face d'entrée 2a de la plaque tubulaire 2, grâce à un dispositif de manutention télécommandé, de façon que la bague 6 vienne en appui sur cette face 2a, autour de l'extrémité du tube 3 qui affleure sur cette face 2a.

L'outillage de martelage 1 comporte une partie mobile 10 montée axialement à l'intérieur de l'enveloppe externe tubulaire 5 et constituée par une buse 12 de projection de particules fixée à l'extrémité d'un tube souple 11. Le tube souple 11 est relié, à l'extrémité de l'outillage opposée à l'extrémité représentée sur la figure 1, à des moyens d'injection d'un gaz portant en suspension des particules.

L'enveloppe externe 5 est reliée à une installation d'aspiration permettant d'établir une dépression dans l'espace annulaire compris entre la surface intérieure de l'enveloppe 5 et le conduit souple 11.

La buse 12 comporte un corps 13 constituant une partie profilée 13a et portant une pièce d'extrémité 14 de forme profilée permettant l'introduction de la partie mobile 10 de l'outillage dans le tube 3, par déplacement dans la direction verticale et vers le haut (position 12' de la buse représentée en traits interrompus). La buse 12 comporte également un dispositif de guidage 15 constitué par une brosse formée de fibres flexibles dirigées dans des directions radiales, d'une longueur permettant un guidage avec un léger frottement à l'intérieur du tube 3.

La partie 13a de la buse de forme profilée permet de diriger les particules en suspension dans le courant de gaz, à leur sortie du conduit 11, dans des directions pratiquement radiales par rapport à la partie interne de l'enveloppe externe 5 et du tube 3.

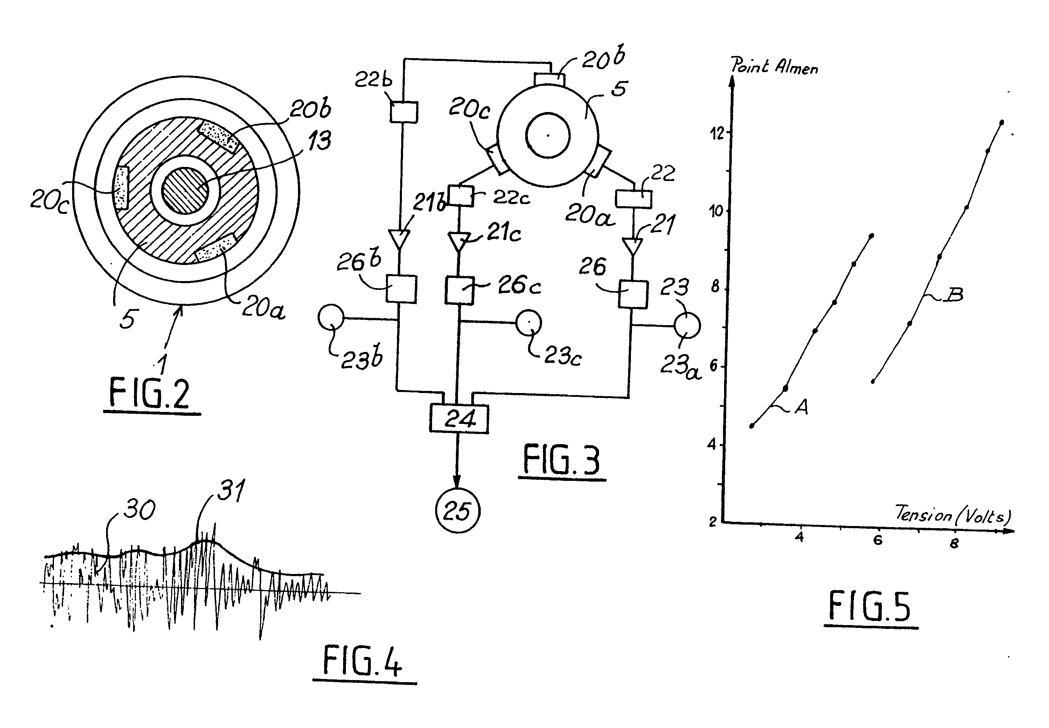

Comme il est visible sur les figures 1 et 2, trois capteurs piézoélectriques 20 sont placés dans la paroi latérale de l'enveloppe externe 5, au voisinage de la partie d'extrémité 6 de cette enveloppe assurant son appui sur la face d'entrée 2a de la plaque tubulaire, lorsque le dispositif de martelage est en fonctionnement.

Les trois capteurs piézoélectriques 20a, 20b et 20c sont disposés à 120° les uns des autres, à la périphérie de l'enveloppe externe 5 comme il est visible sur la figure 2. Ces capteurs piézoélectriques sont insérés dans la paroi de l'enveloppe 5 de façon qu'un très bon contact soit assuré entre cette paroi et les capteurs.

Comme il est visible sur la figure 3, les capteurs piézoélectriques sont reliés chacun à une chaîne de traitement des signaux électriques qu'ils sont susceptibles de fournir dans le cas où ils sont soumis à une sollicitation mécanique externe. Chacune des chaînes de traitement comporte un filtre 22, un amplificateur 21, un module intégrateur 26 et un appareil de mesure 23. L'amplificateur 21, le filtre 22 et le module intégrateur 26 sont disposés en série et la sortie du module 26 est reliée à un sommateur de signaux 24 commun aux trois chaînes de traitement associées aux capteurs 20a, 20b et 20c respectivement. L'appareil de mesure 23 qui est un appareil de mesure de tension est disposé en dérivation à la sortie du module 26.

Les filtres 22 sont du type passe-haut avec une fréquence de coupure de 100 KHz.

Un appareil de mesure de tension électrique 25 est également disposé en sortie du sommateur de signaux électriques 24.

Les capteurs piézoélectriques 20 sont à large bande passante allant de 100 KHz à 2 MHz.

Le traitement de mise en compression par martelage du tube 3 est effectué en introduisant l'ensemble mobile 10 dans le tube, un jet de particules dans un gaz à très grande vitesse étant mis en circulation dans le conduit souple 11 et dirigé radialement vers la paroi du tube par la partie profilée ou tulipe 13a. A la fin du traitement, l'ensemble mobile 10 est redescendu à l'intérieur de l'enveloppe externe 5 de l'outillage de martelage, sans que la circulation du gaz chargé de particules soit interrompue. Lorsque la tulipe 13a parvient au niveau des capteurs piézoélectrique 20, les particules qui viennent frapper la paroi intérieure de l'enveloppe externe 5 produisent des ondes ultrasonores qui sont transmises aux capteurs 20. Ces ondes sont transformées en signaux électriques par les capteurs 20. Les signaux électriques sont ensuite transmis par chacun des capteurs à la chaîne de traitement correspondante.

Dans les conditions du traitement par martelage d'un tube de générateur de vapeur, pour un débit massique de particules de 300 à 700 g/mn, les particules ayant une granulométrie voisine de 100 micromètres, la fréquence des ondes ultrasonores induites par les chocs des particules sur la paroi de l'enveloppe externe 5 est de l'ordre de 1 MHz. Les signaux électriques issus des capteurs sont traités par des filtres 22 puis amplifiés par les amplificateurs à gain variable 21 dont le réglage de gain peut varier entre 20 et 40 dB. On obtient ainsi un signal électrique dont l'amplitude maximum en tension est de l'ordre de 3,5 V.

Les signaux électriques en sortie des amplificateurs 21 sont transformés par les modules intégrateurs 26.

Sur la figure 4, on a donné une représentation du signal électrique 30 à la sortie des amplificateurs 21 et du signal électrique 31 en sortie des modules intégrateurs 26. Le signal 31 en sortie des modules constitue un signal enveloppe traduisant l'allure des variations de la valeur efficace du signal électrique 30.

Les signaux 31 en sortie des modules 26 sont additionnés dans le sommateur de signaux 24 et le signal résultant est transmis au voltmètre 25 qui peut être de type analogique ou numérique.

La mesure de tension effectuée par la voltmètre 25 peut être considérée comme représentative de l'efficacité du traitement de martelage par des particules. En effet, le flux de particules venant frapper la surface intérieure de l'enveloppe 5 au niveau des capteurs 20 est identique au flux de particules ayant assuré le martelage du tube 3, quant à son intensité, sa régularité et à l'énergie de choc des particules.

Ces caractéristiques du flux de particules sont traduites directement par les caractéristiques du spectre des ondes ultrasonores transmises à l'enveloppe 5 et aux capteurs 20, ces ondes étant elles-mêmes transformées en signaux électriques par les capteurs piézoélectriques.

Préalablement à la mise en oeuvre du dispositif de martelage, on effectue un étalonnage consistant à effectuer parallèlement des essais sur éprouvette ALMEN et des mesures en utilisant le dispositif suivant l'invention, pour différentes intensités du martelage.

Sur la figure 5, on a représenté les courbes d'étalonnage obtenues pour un tube de diamètre 19,2 mm (courbe A) et pour un tube de diamètre 22,4 mm (courbe B). Ces courbes donnent en ordonnée l'efficacité du traitement de martelage en points ALMEN, en fonction de la tension mesurée par le dispositif suivant l'invention portée en abscisse.

Les courbes A et B ont été obtenues avec une vitesse de déplacement de la buse 12 dans l'enveloppe externe 5, au niveau des capteurs 20, de 8,8 mm par seconde. Les essais ont été effectués dans le dispositif suivant l'invention à une pression variant entre 1 et 3 bars.

Une opération d'étalonnage doit être effectuée au début de toute opération de martelage sur les tubes d'un générateur de vapeur, puisque la courbe d'étalonnage peut varier en fonction de caractéristiques dues à l'installation.

La courbe d'étalonnage établie avant chaque opération de martelage permet de régler les différents paramètres du traitement, tels que la pression d'injection des particules et la dépression du circuit de retour de ces particules. Ces valeurs sont variables en fonction de la configuration et la longueur du parcours des particules entre les trémies de stockage de ces particules et la buse d'injection. On opère ainsi un ajustage de la pression ou calibrage, avant chaque opération de martelage.

En cours de traitement, après chaque opération de martelage d'un tube, on redescend l'outillage dans l'enveloppe externe jusqu'au niveau des capteurs piézoélectriques et on mesure la tension électrique totale des signaux provenant des capteurs. Cette valeur peut être transformée en points ALMEN en utilisant la courbe d'étalonnage ou utilisée directement pour déterminer si l'efficacité du martelage du tube est considérée comme suffisante.

Si l'efficacité est considérée comme suffisante, le traitement se poursuit par déplacement de l'outillage vers un autre tube et introduction de la buse dans ce tube.

Si l'efficacité du traitement est considérée comme insuffisante, le martelage du tube est effectué une nouvelle fois, après avoir vérifié le réglage des paramètres de fonctionnement de l'installation.

Si les paramètres traduisent un traitement restant défectueux, il faut intervenir sur l'installation pour déterminer l'origine de la déficience et y remédier.

Dans tous les cas, l'efficacité du traitement est contrôlé aussitôt après le martelage du tube et il est possible de remédier à une déficience de ce traitement, de façon immédiate.

D'autre part, la comparaison des mesures fournies par les trois voltmètres 23a, 23b et 23c permet de vérifier si le martelage est effectué par la buse de façon uniforme sur toute la périphérie de l'enveloppe ou du tube. En effet, dans le cas où le flux de particules est parfaitement uniforme sur toute la périphérie de l'enveloppe ou du tube, les signaux fournis par les capteurs 20a, 20b et 20c sont identiques. Dans le cas où on décèle une différence significative entre les mesures fournies par les trois voltmètres 23a, 23b et 23c, on effectue une vérification de l'outillage pour remédier à ce manque d'uniformité de la répartition du flux de particules.

Cette vérification est également immédiate si bien qu'il est possible d'assurer un traitement de chacun des tubes parfaitement contrôlé.

Il est bien évident que l'invention ne se limite pas au mode de réalisation qui a été décrit.

C'est ainsi qu'on peut utiliser à la place de voltmètres de type analogique ou numérique, pour obtenir des valeurs représentatives de l'efficacité du traitement de martelage, tout dispositif de mesure, d'enregistrement ou de visualisation d'un paramètre électrique représentatif des sollicitations reçues par les capteurs piézoélectriques 20.

Dans le cas où l'on effectue un enregistrement continu des tensions des signaux électriques fournis par les chaînes de traitement des capteurs, il est possible de reconstituer tout l'historique du traitement d'un générateur de vapeur.

**Revendications**

1. Dispositif de martelage par des particules de la surface intérieure d'un tube de générateur de vapeur (3) serti dans une plaque tubulaire (2), comportant une enveloppe externe (5) de forme tubulaire ayant une face d'extrémité (6) venant en appui sur une face (2a) de la plaque tubulaire (2) autour d'une extrémité affleurante du tube (3) et un outil comportant une buse (12) de projection des particules transportées par un gaz à grande vitesse fixée à l'extrémité d'une gaine souple (11), monté mobile axialement dans l'enveloppe externe (5), caractérisé par le fait qu'il comporte, pour permettre un contrôle de l'efficacité du martelage, au moins un capteur piézoélectrique (20) disposé en contact avec une partie rectiligne de la paroi de l'enveloppe externe (5), au voisinage de son extrémité d'appui (6) sur la plaque tubulaire (2) et des moyens de mesure (23, 25) du signal électrique engendré dans le capteur (20).

2. Dispositif suivant la revendication 1, caractérisé par le fait qu'il comporte au moins deux capteurs (20a, 20b, 20c) répartis suivant la périphérie de l'enveloppe externe (5).

3. Dispositif suivant la revendication 2, caractérisé par le fait qu'il comporte trois capteurs piézoélectriques (20a, 20b, 20c) disposés à 120° les uns des autres, à la périphérie de l'enveloppe externe (5).

4. Dispositif suivant l'une quelconque des revendications 2 et 3, caractérisé par le fait que chacun des capteurs (20a, 20b, 20c) est relié à une chaine de traitement de signaux électriques (22, 26), les chaines de traitement étant elles-mêmes reliées à un sommateur de signaux (24) en sortie duquel est disposé un appareil de mesure de tension électrique (25).

5. Dispositif suivant la revendication 4, caractérisé par le fait que chacune des chaines de traitement de signaux électriques associées à un capteur piézoélectrique comporte un filtre (22), un amplificateur (21) et un module intégrateur (26).

6. Dispositif suivant l'une quelconque des revendications 4 et 5, caractérisé par le fait qu'un appareil de mesure de tension électrique (23) est disposé en dérivation à la sortie de chacune des chaines de traitement (22, 26) avant le sommateur (24).

7. Procédé de martelage par des particules de la surface intérieure d'un tube de générateur de vapeur (3) serti dans une plaque tubulaire (2) en utilisant un dispositif selon l'une quelconque des revendications 1 à 6, caractérisé par le fait :
— qu'à la fin d'une opération de martelage dans un tube (3) et, dans le but de contrôler l'efficacité du martelage :
— on déplace la buse (12) de projection des particules jusqu'à une position à l'intérieur de l'enveloppe externe (5),
— on projette un jet de particules en suspension dans le gaz à grande vitesse identique au jet de particules ayant effectué le martelage du tube (3) sur la surface intérieure de l'enveloppe externe (5),

— on transforme en signaux électriques les ondes ultrasonores dues aux chocs des particules contre l'enveloppe externe (5),

— on mesure l'amplitude des signaux électriques engendrés par le choc des particules et on utilise la mesure d'amplitude des signaux électriques pour contrôler l'efficacité du martelage dans le tube (3).

8. Procédé suivant la revendication 7, caractérisé par le fait :

— qu'on capte et qu'on transforme en signaux électriques les ondes ultrasonores produites par les particules, en différentes positions autour de l'enveloppe (5),

— qu'on compare l'amplitude des différents signaux électriques obtenus,

— et qu'on détermine si une différence significative existe entre les amplitudes des différents signaux.

**Patentansprüche**

1. Vorrichtung zum Kugelstrahlen der Innenoberfläche eines Dampferzeugerrohres (3), das in eine rohrförmige Platte (2) eingesetzt ist, mit einer äußeren Umhüllung (5) von rohrförmiger Gestalt, die eine Endseite (6) aufweist, die in Anlage an eine Seite (2a) der rohrförmigen Platte (2) um ein eingelassenes Ende des Rohres (3) kommt, und mit einem Werkzeug, das eine Düse (12) zum Ausstoßen der Teilchen aufweist, die durch ein Gas von großer Geschwindigkeit transportiert werden, die am Ende einer nachgiebigen Leitung (11) angeordnet ist, die axial beweglich in der äußeren Hülle (5) angeordnet ist, **dadurch gekennzeichnet,** daß sie, um eine Steuerung der Wirksamkeit des Kugelstrahlens zu erlauben, wenigstens einen piezoelektrischen Aufnehmer (20) aufweist, der in Berührung mit einem geradlinigen Bereich der Seitenwand der äußeren Hülle (5) angeordnet ist, in der Nähe seines Andruckendes (6) auf die rohrförmige Platte (2), und Meßeinrichtungen (23, 25) des elektrischen Signals aufweist, das von dem Aufnehmer (20) erzeugt wird.

2. Vorrichtung nach Anspruch 1, **dadurch gekennzeichnet,** daß sie wenigstens zwei Aufnehmer (20a, 20b, 20c) aufweist, die am Umfang der äußeren Hülle (5) verteilt angeordnet sind.

3. Vorrichtung nach Anspruch 2, **dadurch gekennzeichnet,** daß sie drei piezoelektrische Aufnehmer (20a, 20b, 20c) aufweist, die um 120° versetzt zueinander am Umfang der äußeren Hülle (5) angeordnet sind.

4. Vorrichtung nach Anspruch 2 oder 3, **dadurch gekennzeichnet,** daß jeder der Aufnehmer (20a, 20b, 20c) mit einer Verarbeitungskette der elektrischen Signale (22, 26) verbunden ist, wobei die Verarbeitungsketten selbst mit einem Signalsummierer (24) verbunden sind, an dessen Ausgang ein Gerät zur elektrischen Spannungsmessung (25) angeordnet ist.

5. Vorrichtung nach Anspruch 4, **dadurch gekennzeichnet,** daß eine jede der elektrischen Signalverarbeitungsketten, die mit einem piezoelektrischen Aufnehmer verbunden ist, einen Filter (22), einen Verstärker (21) und einen Integrationsbaustein (26) aufweist.

6. Vorrichtung nach Anspruch 4 oder 5, **dadurch gekennzeichnet,** daß ein Meßgerät der elektrischen Spannung (23) parallel zum Ausgang einer jeden der Verarbeitungsketten (22, 26) vor dem Summierer (24) angeordnet ist.

7. Verfahren zum Kugelstrahlen der Innenoberfläche eines Dampferzeugerrohres (3), das in eine rohrförmige Platte (2) eingesetzt ist, unter Verwendung einer Vorrichtung nach einem der Ansprüche 1 bis 6, **dadurch gekennzeichnet :**

daß am Ende eines Kugelstrahlvorgangs in einem Rohr (3) und mit dem Ziel, die Wirksamkeit des Kugelstrahlens zu steuern :

die Teilchenstrahldüse (12) bewegt wird bis in eine Position im Inneren der äußeren Hülle (5),

ein Strahl von in Suspension in dem Gas mit großer Geschwindigkeit befindlichen Teilchen, identisch zum Teilchenstrahl ausgestoßen wird, der das Kugelstrahlen des Rohres (3) auf der inneren Oberfläche der äußeren Hülle (5) ausgeführt hat, die aufgrund der gegen die äußere Hülle (5) stoßenden Teilchen erzeugten Ultraschallwellen in elektrische Signale umgeformt werden,

die Amplitude der durch den Stoß der Teilchen erzeugten elektrischen Signale gemessen wird, und die Amplitudenmessung der elektrischen Signale verwendet wird, um die Wirksamkeit des Kugelstrahlens in dem Rohr (3) zu steuern.

8. Verfahren nach Anspruch 7, **dadurch gekennzeichnet :**

daß die von den Teilchen erzeugten Ultraschallwellen an unterschiedlichen Stellen um die Hülle (5) herum aufgenommen werden und in elektrische Signale umgewandelt werden,

daß die Amplitude der erhaltenen unterschiedlichen elektrischen Signale verglichen wird, und daß bestimmt wird, ob ein signifikanter Unterschied besteht zwischen den Amplituden der unterschiedlichen Signale.

**Claims**

1. Apparatus for particle hammering of the inner surface of a steam generator tube (3) set into a tube plate (2), comprising an outer housing (5) of tubular shape having an end face (6) coming to bear on a face (2a) of the tube plate (2) around a flush end of the tube (3) and a tool comprising a nozzle (12) for projecting particles conveyed by a gas at high speed and fixed to the end of a flexible sheath (11), mounted to be axially movable in the outer housing (5), characterised in that it comprises, for the purpose of monitoring the effectiveness of the hammering, at least one piezoelectric sensor (20) arranged in contact with a straight part of the wall of the outer housing (5), in the vicinity of its end (6) bearing against the tube plate (2), and means for measuring (23, 25) the electrical signal generated in the sensor (20).

2. Apparatus according to claim 1, characterised in that it comprises at least two sensors (20a, 20b, 20c) distributed along the periphery of the outer housing (5).

3. Apparatus according to claim 2, characterised in that it comprises three piezoelectric sensors (20a, 20b, 20c) arranged at 120° from each other at the periphery of the outer housing (5).

4. Apparatus according to either of claims 2 and 3, characterised in that each of the sensors (20a, 20b, 20c) is connected to a system for processing electrical signals (22, 26), the processing systems being themselves connected to a signal summer (24), at the output of which an apparatus for measuring electrical voltage (25) is arranged.

5. Apparatus according to claim 4, characterised in that each of the systems for processing the electrical signals associated with a piezoelectric sensor comprises a filter (22), an amplifier (21) and an integrating module (26).

6. Apparatus according to either of claims 4 and 5, characterised in that an apparatus for measuring electrical voltage (23) is arranged branching off from the output of each of the processing systems (22, 26) before the summer (24).

7. Process for particle hammering of the inner surface of a steam generator tube (3) set into a tube plate (2), using an apparatus according to any claims 1 to 6, characterised in that :

at the end of a hammering operation in a tube (3), for the purpose of monitoring the effectiveness of the hammering,

the nozzle (12) for projecting the particles is moved into a position inside the outer housing (5),

a jet of particles suspended in the gas at high speed, which is identical to the jet of particles which has performed the hammering of the tube (3), is projected onto the inner surface of the outer housing (5),

the ultrasonic waves caused by the impact of the particles against the outer housing (5) are converted into electrical signals, and

the amplitude of the electrical signals produced by the impact of the particles is measured and the measurement of the amplitude of the electrical signals is used to monitor the effectiveness of the hammering in the tube (3).

8. Process according to claim 7, characterised in that :

the ultrasonic waves produced by the particles in various positions around the housing (5) are sensed and converted into electrical signals,

the amplitude of the various electrical signals obtained is compared, and,

it is determined whether there is a significant difference between the amplitudes of the various signals.

# FIG.1

**FIG.2**

**FIG.3**

**FIG.4**

**FIG.5**

EP 0 284 476 B1